# EUROPÄISCHE PATENTANMELDUNG

(11) **EP 3 384 760 A1**
(43) Veröffentlichungstag der Anmeldung: **10.10.2018**
(21) Anmeldenummer: 18166084.6
(22) Anmeldetag: 06.04.2018
(51) Int. Cl.: A01G 3/025, F23Q 2/36

(54) **HANDGEFÜHRTES GERÄT**

(30) Priorität: 06.04.2017 AT 502862017
(71) Anmelder: Floh, Helmut, 3914 Waldhausen (AT)
(72) Erfinder: Floh, Helmut, 3914 Waldhausen (AT)
(74) Vertreter: Müllner, Martin

(57) **Zusammenfassung**

Das handgeführte Gerät hat einen Gerätestiel mit zumindest zwei teleskopierbar ineinander schiebbaren Stielabschnitten (11, 12). An einem Endbereich eines ersten Stielabschnitts (11) ist ein bewegbares Element (19) angeordnet, und an einem davon abgewandten Endbereich eines zweiten Stielabschnitts (12) ist ein relativ zum zweiten Stielabschnitt (12) beweglich angebrachtes Betätigungselement (23, 25') vorgesehen, das mittels eines flexiblen Zugmittels (13) mit dem bewegbaren Element (19) verbunden ist. Um einen automatischen Längsausgleich des Zugmittels (13) bei Verschiebung der beiden Stielabschnitte (11, 12) zueinander zu erreichen ist erfindungsgemäß vorgesehen, dass das Betätigungselement (23, 25') von dem flexiblen Zugmittel (13) abkuppelbar ist und dass das Zugmittel (13) mit seinem dem bewegbaren Element (19) abgewandten Ende auf einer federbelasteten Trommel (17) aufgewickelt ist, sodass bei abgekuppeltem Betätigungselement (23, 25') das flexible Zugmittel (13) unter einer vorgegebenen Zugspannung steht. Das Kuppeln kann manuell über einen Kupplungshebel (25) oder automatisch bei Betätigung des Betätigungselements (25') erfolgen. Das Gerät ist insbesondere zur Fernbedienung eines Feuerzeugs (31) geeignet, das mittels eines am ersten Stielabschnitt (11) anzubringenden Adaptergehäuses (32) montiert werden kann.

## Beschreibung

### Technisches Gebiet

Die vorliegende Erfindung betrifft ein handgeführtes Gerät mit einem schlanken, langgestreckten Gerätestiel, der zumindest zwei teleskopierbar ineinander schiebbare Stielabschnitte aufweist, wobei an einem Endbereich eines ersten Stielabschnitts ein bewegbares Element angeordnet ist und an einem davon abgewandten Endbereich eines zweiten Stielabschnitts zumindest ein relativ zum zweiten Stielabschnitt beweglich angebrachtes Betätigungselement vorgesehen ist, das mittels eines flexiblen Zugmittels mit dem bewegbaren Element verbunden ist, um eine Übertragung einer Bewegung auf das bewegbare Element zu bewirken.

### Stand der Technik

Solche Geräte kommen zum Beispiel bei Astscheren zum Einsatz. Die Herausforderung besteht darin, die Länge des Zugmittels automatisch anzupassen, wenn das Gerät auseinandergezogen oder zusammengeschoben wird.

Aus DE 102006007268 A ist bekannt, das Zugmittel vom Betätigungselement zu einer losen Rolle, die am bewegbaren Element befestigt ist, zu führen, von dort zu einer Rolle, die am entgegengesetzten Ende des ersten Stielabschnitts angebracht ist, von dieser zu einer Rolle, die am benachbarten Ende des zweiten Stielabschnitts angebracht ist, und von dieser Rolle zu einem weiteren Betätigungselement, das koaxial um den zweiten Stielabschnitt angeordnet ist. Zieht man nun die beiden Stielabschnitte um die Strecke x auseinander, verlängert sich der Abstand vom Betätigungselement zur losen Rolle um die Strecke x; die Strecke von der losen Rolle zur Rolle am ersten Stielabschnitt bleibt konstant; der Abstand von der Rolle am ersten Stielabschnitt zur Rolle am zweiten Stielabschnitt verringert sich um die Strecke x; und der Abstand von der Rolle am zweiten Stielabschnitt zum zweiten Betätigungselement ist konstant. Somit ändert die lose Rolle und somit das bewegbare Element ihre bzw. seine Position bezüglich des ersten Stielabschnitts nicht, wenn die beiden Stielabschnitte auseinandergezogen oder zusammengeschoben werden, sondern nur dann, wenn eines der Betätigungselemente betätigt wird.

Diese Konstruktion hat zwei Nachteile: Durch das Vorsehen einer losen Rolle muss man, um das bewegbare Element um die Strecke x zu bewegen, das Betätigungselement um 2x, also um die doppelte Strecke, bewegen. Dies ist bei Astscheren sinnvoll, wo man ohnehin eine starke Untersetzung braucht. Will man aber leichtgängige Elemente steuern, wie z.B. ein Feuerzeug, so ist dies hinderlich. Außerdem muss das flexible Zugmittel zwischen den beiden Stielabschnitten geführt werden, was einen sehr hohen Unterschied von deren Durchmessern erforderlich macht, d.h. der zweite Stielabschnitt ist verglichen zum ersten Stielabschnitt sehr dick. Schließlich kann die Rolle am zweiten Stielabschnitt nur einen sehr kleinen Durchmesser haben (nämlich maximal den Unterschied zwischen Außendurchmesser des ersten Stielabschnitts und Innendurchmesser des zweiten Stielabschnitts), sodass das flexible Zugmittel sehr stark auf Biegung beansprucht wird.

### Kurzbeschreibung der Erfindung

Es ist Aufgabe der vorliegenden Erfindung, das Gerät der eingangs genannten Art so zu verbessern, dass es für die Übertragung geringer Kräfte besser geeignet ist.

Diese Aufgabe wird durch ein Gerät der eingangs genannten Art erfindungsgemäß dadurch gelöst, dass das Betätigungselement von dem flexiblen Zugmittel abkuppelbar ist und dass das Zugmittel mit seinem dem bewegbaren Element abgewandten Ende auf einer federbelasteten Trommel aufgewickelt ist, sodass bei abgekuppeltem Betätigungselement das flexible Zugmittel unter einer vorgegebenen Zugspannung steht.

Will man die beiden Stielabschnitte gegeneinander verschieben, kuppelt man das Zugmittel vom Betätigungselement ab. Da sich beim Verschieben der Abstand vom bewegbaren Element zur Trommel ändert, wickelt sich das Zugmittel von dieser ab (wenn man die beiden Stielabschnitte auseinander zieht) bzw. auf diese auf (wenn man die beiden Stielabschnitte zusammen schiebt). Nachdem man die beiden Stielabschnitte auf übliche Weise zueinander fixiert hat, kuppelt man das Zugmittel mit dem Betätigungselement und kann somit durch Betätigen des Betätigungselements das bewegbare Element bewegen.

Es ist zweckmäßig, wenn am Betätigungselement ein Kupplungshebel angebracht ist, der bei Betätigung das flexible Zugmittel mit dem Betätigungselement kuppelt. Auf diese Weise ist eine Einhandbedienung möglich.

Alternativ dazu kann das Betätigungselement in nicht betätigtem Zustand ausgekuppelt und bei Betätigung automatisch mit dem flexiblen Zugmittel gekuppelt sein, sodass die Bedienungsperson sich um das Kuppeln überhaupt nicht kümmern muss.

Vorzugsweise ist das bewegbare Element entgegen der Federkraft der Trommel mit einer Feder vorgespannt, und zwar mit einer höheren Kraft als der Federkraft der Trommel. Auf diese Weise bleibt das bewegbare Element immer in der vorderen (nicht betätigten) Position, auch dann, wenn kein zu betätigender Gegenstand (wie z.B. ein Feuerzeug) eingesetzt ist, es sei denn, es wird mittels des Betätigungselements über das Zugmittel verschoben.

Die vorliegende Erfindung lässt sich zur Betätigung herkömmlicher Feuerzeuge verwenden, wenn das bewegbare Element mit dem Druckknopf eines Feuerzeugs zusammenwirkt. Auf diese Weise ist es z.B. als Kerzenanzünder in Kirchen oder für Christbäume geeignet.

Um Modularität zu erreichen ist es zweckmäßig, wenn auf den ersten Stielabschnitt ein Adaptergehäuse aufgesetzt ist, das eine Ausnehmung für das Feuerzeug, eine Fixiervorrichtung für das Feuerzeug und eine Stange mit abgewinkelten Enden aufweist, wobei ein abgewinkeltes Ende mit dem Druckknopf des Feuerzeugs zusammenwirkt und das andere Ende mit dem bewegbaren Element des Zugmittels zusammenwirkt. Auf diese Weise braucht für verschiedene Feuerzeuge nur der Adapter getauscht zu werden.

### Kurze Beschreibung der Zeichnungsfiguren

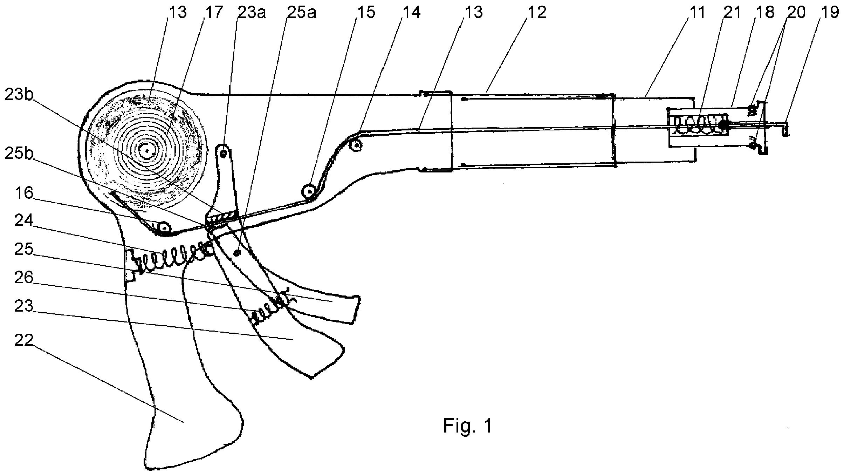

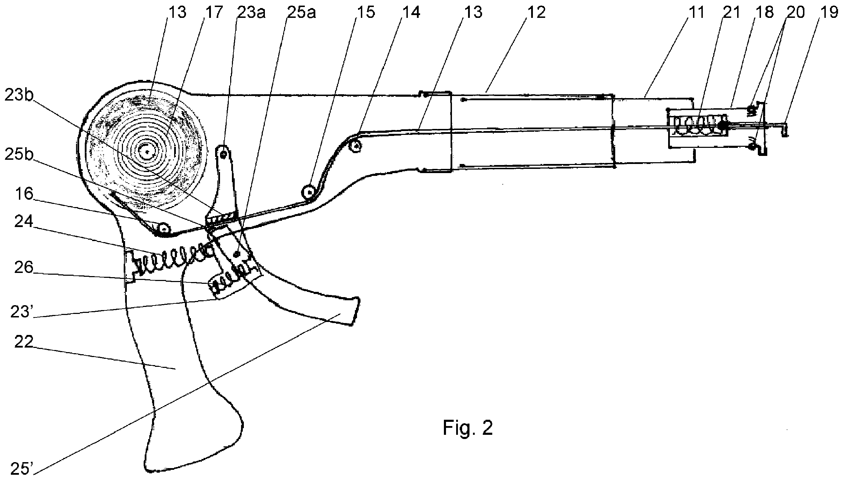

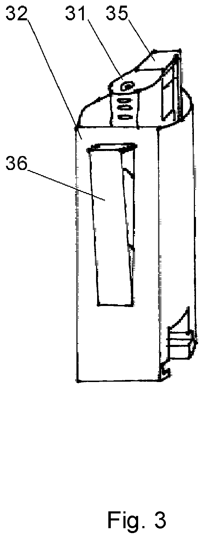

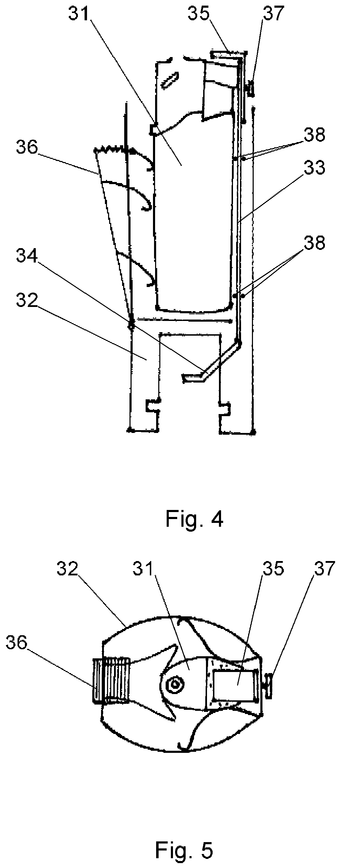

An Hand der beiliegenden Zeichnungen wird die vorliegende Erfindung näher erläutert. Es zeigt: Fig. 1 ein erfindungsgemäßes Gerät im Schnitt; Fig. 2 eine andere Ausführungsform eines erfindungsgemäßen Gerätes im Schnitt; Fig. 3 einen Adapter zum Aufschieben auf ein Gerät nach Fig. 1 oder 2 in perspektivischer Ansicht; Fig. 4 den Adapter im Schnitt; und Fig. 5 den Adapter von oben.

### Beschreibung der Ausführungsarten

Wie aus Fig. 1 ersichtlich, sind ein erster Stielabschnitt 11 und ein zweiter Stielabschnitt 12 vorgesehen, die beide rohrförmig sind und teleskopartig zusammengeschoben werden können. Der zweite Stielabschnitt 12 ist mit seinem freien Ende an einem Griff 22 befestigt, wogegen der erste Stielabschnitt 11 an seinem freien Ende ein bewegbares, nämlich in Längsrichtung der beiden Stielabschnitte 11, 12 verschiebbares Element 19 aufweist. Das bewegbare Element 19 ist in einem Sockel 18, der am freien Ende des ersten Stielabschnitts 11 befestigt ist, gelagert und durch eine Feder 21 vorgespannt. Es ist an seinem freien Ende hakenförmig umgebogen und am gegenüberliegenden Ende mit einem flexiblen Zugmittel 13 verbunden. Je nach der zu erwartenden mechanischen Belastung kann dieses Zugmittel 13 als Faden, Seil oder Band ausgebildet sein. Das Zugmittel 13 läuft durch das Innere der beiden Stielabschnitte 11, 12 in das Innere des Griffs 22, wo es über insgesamt drei Rollen 14, 15 und 16 zu einer federbelasteten Trommel 17 geführt ist. Auf dieser Trommel 17 ist eine ausreichende Länge des Zugmittels 13 aufgewickelt.

Wenn die beiden Stielabschnitte 11, 12 gegeneinander verschoben werden, also der erste Stielabschnitt 11 ausgefahren oder eingezogen wird, wickelt sich eine entsprechende Länge des Zugmittels 13 von der Trommel 17 ab bzw. auf diese auf.

Da die Kraft der Feder 21 höher ist als die Spannkraft der Trommel 17, befindet sich das bewegbare Element 19 im Normalfall immer in der ausgefahrenen Stellung (rechts in Fig. 1). Um es mittels des flexiblen Zugmittels 13 zurückzuziehen, sind ein Betätigungselement 23 und ein Kupplungshebel 25 vorgesehen. Das Betätigungselement 23 ist als einarmiger Hebel ausgeführt, welcher um eine Achse 23a, die im Griff 22 fixiert ist, schwenkbar ist. Der Kupplungshebel 25 ist als zweiarmiger Hebel ausgeführt und um eine Achse 25a, die im Betätigungselement 23 befestigt ist, schwenkbar gelagert.

Der Kupplungshebel 25 weist eine Klemmfläche 25b auf, die mit einem Widerlager 23b des Betätigungselements 23 zusammenwirkt. Das Zugmittel 13 ist zwischen der Klemmfläche 25b und dem Widerlager 23b hindurchgeführt, sodass es durch Betätigung des Kupplungshebels 25 geklemmt wird. Betätigt man nun in der geklemmten Stellung das Betätigungselement 23, werden das Zugmittel 13 und somit das bewegbare Element 19 zurückgezogen. Zur Erleichterung der Bedienung sind sowohl das Betätigungselement 23 als auch der Kupplungshebel 25 durch Federn 24 bzw. 26 vorgespannt, d.h. nach Betätigung müssen das Betätigungselement 23 und der Kupplungshebel 25 nur losgelassen werden, sie kehren selbsttätig in die Ausgangslage zurück.

Die Ausführungsform gemäß Fig. 2 unterscheidet sich von der Ausführungsform gemäß Fig. 1 nur durch die Ausbildung des Betätigungselements und des Kupplungshebels. Das Betätigungselement 23 von Fig. 1 ist wesentlich kürzer ausgebildet und dient als Hilfshebel 23'. Sowohl die Betätigung als auch das Kuppeln erfolgt nun mittels des Betätigungselements 25', das ähnlich ausgeführt ist wie der Kupplungshebel 25 von Fig. 1. Betätigt man das Betätigungselement 25', so verdreht sich dieses zunächst gegen die Kraft der Feder 26 um die Achse 25a, bis die Klemmfläche 25b gegen das Widerlager 23b drückt und das Zugmittel 13 klemmt. Nun drehen sich Betätigungselement 25' und Hilfshebel 23' gemeinsam gegen die Kraft der Feder 24 um die Achse 23a, sodass das Zugmittel 13 zurückgezogen wird. Die Klemmkraft wird durch die Differenz der Drehmomente bestimmt, welche die beiden Federn 24 und 26 erzeugen, d.h. die Feder 24 muss entsprechend stark ausgebildet sein, um ein sicheres Klemmen zu gewährleisten.

Damit ein Feuerzeug betätigt werden kann, hat der Sockel 18 eine Aufnahme für ein Adaptergehäuse 32 (siehe Fig. 3 bis 5), sodass dieses formschlüssig aufgeschoben werden kann. Zur Fixierung dienen federbelastete Fixierkugeln 20 (siehe Fig. 1 und 2), die in nicht dargestellte Vertiefungen des Adaptergehäuses 32 (siehe Fig. 3 bis 5) einrasten. Das hakenförmig umgebogene Ende des bewegbaren Elements 19 (siehe Fig. 1 und 2) hintergreift dabei ein abgewinkeltes Ende 34 (siehe Fig. 3 bis 5) einer Stange 33, welche durch Führungsstifte 38 längsverschiebbar im Adaptergehäuse 32 geführt ist. Gegenüber dem abgewinkelten Ende 34 hat die Stange 33 ein weiteres abgewinkeltes Ende 35, welches aber nicht einstückig mit der Stange 33 ausgebildet ist, sondern mit einer Klemmschraube 37 an dieser fixiert ist. Durch Vorsehen entsprechender Langlöcher kann dabei eine Höhenverstellung des abgewinkelten Endes 35 erreicht werden.

Gegenüber der Stange 33 ist eine Fixiervorrichtung 36 mit Federn vorgesehen, die - wenn sie hineingedrückt wird - ein in eine entsprechende Ausnehmung eingesetztes Feuerzeug 31 klemmend hält. Vor dem Einsetzen des Feuerzeugs 31 wird das abgewinkelte Ende 35 abgenommen, und nach dem Einsetzen des Feuerzeugs 31 wird dieses in der entsprechenden Stellung mit der Klemmschraube 37 so fixiert, dass zwischen dem Betätigungsknopf des Feuerzeugs 31 und dem abgewinkelten Ende 35 nur ein geringes Spiel verbleibt.

Wenn nun in diesem Zustand das Zugmittel 13 geklemmt und das Betätigungselement 23, 25' betätigt wird, drückt das abgewinkelte Ende 35 auf den Betätigungsknopf des Feuerzeugs 31 und bewirkt damit, dass das Feuerzeug 31 zündet und eine Flamme entsteht. Sobald das Betätigungselement 23, 25' losgelassen wird, wird auch der Betätigungsknopf des Feuerzeugs 31 losgelassen und die Flamme erlischt.

Die Erfindung wurde beispielsweise anhand der Betätigung eines Feuerzeugs beschrieben. Sie kann aber zur Fernbedienung beliebiger Gegenstände verwendet werden, wie zum Beispiel zur Auslösung eines Fotoapparats oder auch zur Fernbedienung einer Schere, wenn mit dieser nicht allzu viel Kraft aufgebracht werden muss (zum Beispiel zum Abschneiden dünner Zweige).

## Patentansprüche

1. <Handgeführtes Gerät mit einem schlanken, langgestreckten Gerätestiel, der zumindest zwei teleskopierbar ineinander schiebbare Stielabschnitte (11, 12) aufweist, wobei an einem Endbereich eines ersten Stielabschnitts (11) ein bewegbares Element (19) angeordnet ist und an einem davon abgewandten Endbereich eines zweiten Stielabschnitts (12) zumindest ein relativ zum zweiten Stielabschnitt (12) beweglich angebrachtes Betätigungselement (23, 25') vorgesehen ist, das mittels eines flexiblen Zugmittels (13) mit dem bewegbaren Element (19) verbunden ist, um eine Übertragung einer Bewegung auf das bewegbare Element (19) zu bewirken, **dadurch gekennzeichnet, dass** das Betätigungselement (23, 25') von dem flexiblen Zugmittel (13) abkuppelbar ist und dass das Zugmittel (13) mit seinem dem bewegbaren Element (19) abgewandten Ende auf einer federbelasteten Trommel (17) aufgewickelt ist, sodass bei abgekuppeltem Betätigungselement (23, 25') das flexible Zugmittel (13) unter einer vorgegebenen Zugspannung steht.

2. Handgeführtes Gerät nach Anspruch 1, **dadurch gekennzeichnet, dass** am Betätigungselement (23) ein Kupplungshebel (25) angebracht ist, der bei Betätigung das flexible Zugmittel (13) mit dem Betätigungselement (23) kuppelt.

3. Handgeführtes Gerät nach Anspruch 1, **dadurch gekennzeichnet, dass** das Betätigungselement (25') in nicht betätigtem Zustand ausgekuppelt und bei Betätigung automatisch mit dem flexiblen Zugmittel (13) gekuppelt ist.

4. Handgeführtes Gerät nach einem der Ansprüche 1 bis 3, **dadurch gekennzeichnet, dass** das bewegbare Element (19) entgegen der Federkraft der Trommel (17) mit einer Feder (21) vorgespannt ist, und zwar mit einer höheren Kraft als der Federkraft der Trommel (17).

5. Handgeführtes Gerät nach einem der Ansprüche 1 bis 4, **dadurch gekennzeichnet, dass** das bewegbare Element (19) mit dem Druckknopf eines Feuerzeugs (31) zusammenwirkt.

6. Handgeführtes Gerät nach Anspruch 5, **dadurch gekennzeichnet, dass** auf den ersten Stielabschnitt (11) ein Adaptergehäuse (32) aufgesetzt ist, das eine Ausnehmung für das Feuerzeug (31), eine Fixiervorrichtung (36) für das Feuerzeug (31) und eine Stange (33) mit abgewinkelten Enden (34, 35) aufweist, wobei ein abgewinkeltes Ende (35) mit dem Druckknopf des Feuerzeugs (31) zusammenwirkt und das andere Ende (34) mit dem bewegbaren Element (19) des Zugmittels (13) zusammenwirkt.
